# EUROPÄISCHE PATENTSCHRIFT

(11) **EP 0 455 874 B1**
(45) Veröffentlichungstag und Bekanntmachung des Hinweises auf die Patenterteilung: **27.09.1995**
(21) Anmeldenummer: 90124058.0
(22) Anmeldetag: 13.12.1990
(51) Int. Cl.: G11B 27/24, H04N 5/78

(54) **Videorecorder**
Video tape recorder
Magnétoscope

(30) Priorität: 07.05.1990 DE 4014513
(43) Veröffentlichungstag der Anmeldung: 13.11.1991
(73) Patentinhaber: Nokia (Deutschland) GmbH, 75175 Pforzheim (DE)
(72) Erfinder: Reime, Gerd, W-7542 Schömberg 4 (DE)

(56) Entgegenhaltungen:
- DE-A- 3 006 735
- DE-A- 3 806 330

## Beschreibung

Die Erfindung betrifft einen Videorecorder, mit dem es möglich ist, zu Information, die bereits auf einem Band aufgezeichnet worden ist, weitere Information hinzuzufügen. Dies erfolgt in der Regel in solchen Abschnitten der Aufzeichnungsspuren, die nicht sichtbaren Bildzeilen des Videosignals zugeordnet sind.

### STAND DER TECHNIK

Wenn nachträglich Information zu bereits aufgezeichneter Information hinzuzufügen ist, muß dauernd zwischen einer Lesebetriebsart und einer Schreibbetriebsart hin- und hergeschaltet werden. In der Lesebetriebsart wird festgestellt, wann ein Horizontalsynchronisierimpuls auftritt und damit der Aufzeichnungsabschnitt für eine Zeile beginnt. Dann wird für eine vorgegebene Zeitspanne auf Aufzeichnungsbetrieb umgeschaltet. Kurz bevor der nächste Horizontalsynchronisierimpuls zu erwarten ist, wird wieder auf die Lesebetriebsart umgeschaltet, um diesen Impuls detektieren zu können. Bei diesem Umschalten kommt es zu Signalstörungen, die beim späteren Lesen der nachträglich aufgezeichneten Information Lesefehler zur Folge haben. Um diese Lesefehler so gut wie möglich zu vermeiden, wird in der Praxis mit dem Einschreiben von Daten nicht sofort nach dem Umschalten auf die Schreibbetriebsart begonnen, sondern es wird zunächst nur der unmodulierte FM-Träger aufgezeichnet und dieser Träger wird erst nach Ablauf einer Wartespanne von z.B. 20 - 30 µsec mit Datenschreibsignalen moduliert. Die beim Umschalten von der Lese- auf die Schreibbetriebsart hervorgerufenen Störungen wirken sich dann beim Lesen nicht mehr aus. Nachteilig ist jedoch, daß erheblich Aufzeichnungskapazität verloren geht.

Aus dem Vorstehenden ist ersichtlich, daß seit längerem das Problem besteht, einen Videorecorder anzugeben, mit dem möglichst störungsfrei nachträglich Information auf ein bereits beschriebenes Band aufgezeichnet werden kann.

### DARSTELLUNG DER ERFINDUNG

Der erfindungsgemäße Videorecorder weist folgende Merkmale auf:
- einen Schreib/Lesekopf zum Schreiben von FM-Signalen auf ein Band und zum Lesen aufgezeichneter FM-Signale,
- einen VCO zum Wandeln von Datenschreibsignalen in FM-Signale,
- einen Dateneingangsanschluß zum Zuführen von Datenschreibsignalen zum VCO,
- einer PLL-Schaltung, die in einer Lesebetriebsart die Phasen des gelesenen Signals und des VCO-Ausgangssignals miteinander vergleicht und ein integriertes Regelabweichungssignal als PLL-Ausgangssignal ausgibt,
- eine erste Umschalteinrichtung zum wahlweisen Umschalten zwischen der Schreibbetriebsart und der Lesebetriebsart, welche so ausgebildet ist, daß sie einen Datensignalschalter aufweist, der in der Lesebetriebsart das PLL-Ausgangssignal auf den Eingang des VCO schaltet und in der Schreibbetriebsart dann, wenn Dateninformation zu schreiben ist, den Dateneingangsanschluß auf den Eingang des VCO schaltet,
- und eine zweite Umschalteinrichtung zum wahlweisen Umschalten des Schreibeingangs der Schreib/Leseanordnung zwischen aufzuzeichnenden Videoschreibsignalen und aufzuzeichnenden modulierten Datenschreibsignalen, die vom VCO erzeugt werden.

Dieser Erfindung liegt die Erkenntnis zugrunde, daß die beim bisherigen nachträglichen Aufzeichnen beobachteten Störsignale vor allem davon herrühren, daß die modulierten Datenschreibsignale beim Umschalten von der Lese- auf die Schreibbetriebsart nicht in Phase mit den bis dahin gelesenen, also zuvor aufgezeichneten Signalen sind. Beim Lesen wirkt sich dieser Phasensprung zwischen bereits aufgezeichneten und nachträglich aufgezeichneten Signalen dahingehend aus, daß der Demodulator vorübergehend aussetzt, der dazu dient, das gelesene modulierte FM-Signal zu demodulieren.

Beim erfindungsgemäßen Videorecorder wird der VCO, der zum Wandeln der Datenschreibsignale in FM-Signale dient, in der Lesebetriebsart dauernd in Phase mit den gelesenen Signalen gehalten. Wird dann auf die Schreibbetriebsart umgeschaltet, erfolgt das nachträgliche Aufzeichnen von Information ohne Phasensprung bezogen auf das bereits aufgezeichnete FM-Signal. Beim Umschalten können zwar noch kleinere Schaltstörungen auftreten, jedoch keine Phasensprünge mehr. Durch die bloßen Schaltstörungen wird die Funktion eines üblichen Demodulators nicht gestört. Es ist daher möglich, unmittelbar nach dem Umschalten von der Lesebetriebsart in die Schreibbetriebsart mit dem Einschreiben von Information zu beginnen. Diese Information kann aufgrund der ungestörten Funktion des Demodulators fehlerfrei von Anfang gelesen werden. Dadurch läßt sich die Schreibkapazität voll ausschöpfen.

### KURZE BESCHREIBUNG DER FIGUREN

Fig. 1 Blockschaltbild eines Videorecorders, bei dem es ohne Phasensprung möglich ist, von der Lesebetriebsart in die Schreibbetriebsart umzuschalten; und
Fig. 2 schematisches Diagramm des Spannungsverlaufs eines aufgezeichneten Signals (in Pegeldarstellung statt in FM-Signal-Darstellung).

### BESCHREIBUNG VON AUSFÜHRUNGSBEISPIELEN

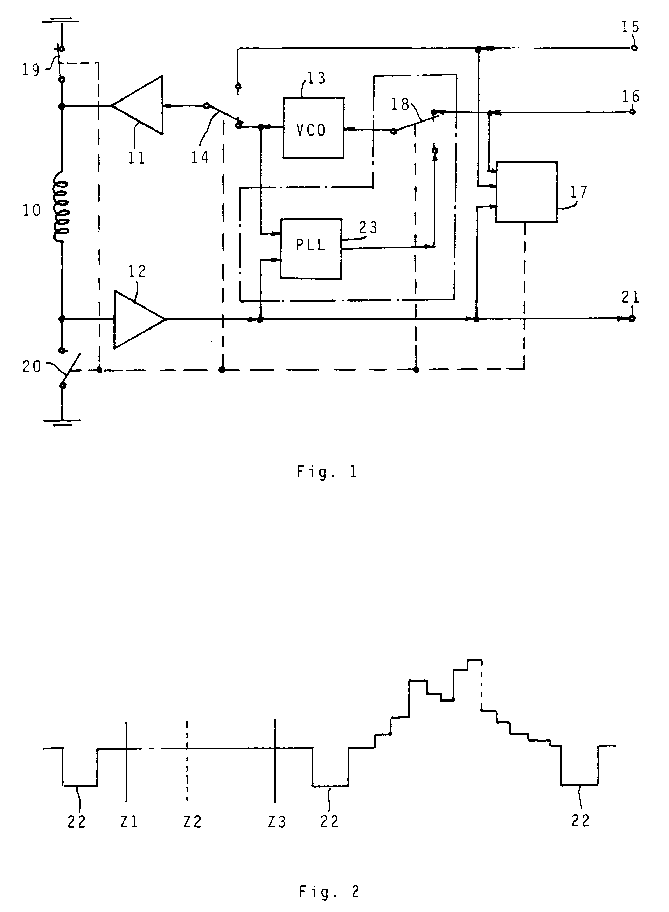

Das Blockschaltbild gemäß Fig. 1 zeigt solche Funktionsgruppen eines Videorecorders, wie sie für die folgenden Erläuterungen von Bedeutung sind. Es ist eine Spule 10 eines Schreib/Lesekopfes vorhanden, die entweder über einen Schreibsignalverstärker 11 FM-Signale zum Aufzeichnen empfängt oder die über einen Lesesignalverstärker 12 gelesene Signale ausgibt. Zu schreibende Signale werden über einen Schreibsignalschalter 14 entweder von einem Videoanschluß 15 oder über einen VCO 13 von einem Dateneingangsanschluß 16 geliefert. Eine erste Umschalteinrichtung, zu der eine Torschaltung 17, ein Datensignalschalter 18, ein Lese-Masseschalter 19 und ein Schreib-Masseschalter 20 gehören, realisiert das Umschalten von der Lesebetriebsart in die Schreibbetriebsart.

Die insoweit beschriebene Schaltung ist identisch mit herkömmlichen Schaltungen. Wenn der Datensignalschalter 18 dauernd in der in Fig. 1 dargestellten Stellung gehalten wird, also der Stellung, in der er Datenschreibsignale vom Dateneingangsanschluß 16 zum VCO 13 liefert, weist die Schaltung genau die Funktion einer herkömmlichen Schaltung auf. Diese Funktion wird im folgenden beschrieben.

In der Schreibbetriebsart ist der Schreib-Masseschalter 20 geschlossen und der Lese-Masseschalter 19 geöffnet. Abhängig von der Stellung des Schreibsignalschalters 14, der im Zusammenhang mit der Torschaltung 17 eine zweite Umschalteinrichtung bildet, werden dann entweder Videosignale, wie sie über den Videosignalanschluß 15 bezogen werden, oder vom VCO 13 modulierte Datenschreibsignale, wie sie über den Dateneingangsanschluß 16 bezogen werden, auf ein (nicht dargestelltes) Band aufgezeichnet. In der Lesebetriebsart ist dagegen der Lese-Masseschalter 19 geschlossen und der Schreib-Masseschalter 20 geöffnet. Lesesignale werden dann über den Leseverstärker 12 an einen Ausgangsanschluß 21 geliefert.

Wenn in bereits aufgezeichnete Information nachträglich weitere Information eingeschrieben wird, findet dauernd ein Wechsel zwischen Lese- und Schreibbetrieb statt, was durch entsprechendes Hin- und Herschalten des Lese-Masseschalters 19 und des Schreib-Masseschalters 20 bewerkstelligt wird. Dieses dauernde Hin- und Herschalten ist erforderlich, da es erforderlich ist, aufgezeichnete Synchronisiersignale nicht zu überschreiben. Um dies zu gewährleisten, werden in der Lesebetriebsart die Synchronisiersignale detektiert. Nach jedem Synchronisiersignal wird in Schreibbetrieb umgeschaltet, der dann jeweils rechtzeitig vor den Zeitpunkten verlassen wird, zu denen wieder ein Synchronisiersignal erwartet wird. Dies sei anhand von Fig. 2 veranschaulicht.

Fig. 2 zeigt über der Zeit auftragen den pegelmäßigen Verlauf eines bereits aufgezeichneten Signals. Den Pegeln entsprechen tatsächlich unterschiedliche Wellenlängen eines FM-Signals. In regelmäßigen zeitlichen Abständen weist das Signal einen Horizontalsynchronisierimpuls 22 auf. Von Impuls zu Impuls vergehen bei Aufzeichnung in NTSC-Norm jeweils 64 µsec. Zwischen den ersten beiden Horizontalsynchronisierimpulsen 22 in Fig. 2 ist noch keine Information aufgezeichnet. Es handelt sich hier um den Abschnitt für eine nicht sichtbare Zeile. Zwischen dem zweiten und dem dritten Impuls ist dagegen Information für eine sichtbare Zeile vorhanden. Durch zwei vertikale durchgezogene Striche ist in Fig. 2 eingezeichnet, über welche Zeitspanne nachträglich Information in den Spurabschnitt für die nicht sichtbare Zeile eingeschrieben werden kann. Die zugehörigen Zeitpunkte sind in Fig. 2 mit Z1 bzw. Z3 bezeichnet.

Beim nachträglichen Aufzeichnen von Dateninformation befinden sich der Schreibsignalschalter 14 und der Datensignalschalter 18 dauernd in den in Fig. 1 eingezeichneten Stellungen. Wird der Zeitpunkt Z1 erreicht, werden die beiden Masseschalter umgeschaltet, um von der Lese- auf die Schreibbetriebsart zu schalten. Bei diesem Umschalten kommt es in aller Regel zu einem Phasensprung im aufgezeichneten FM-Signal. Wenn nicht zufälligerweise der Phasenunterschied zwischen dem bereits aufgezeichneten FM-Signal und dem nachträglich aufgezeichneten Signal sehr gering ist, führt die Phasenverschiebung dazu, daß beim späteren Lesen der Signale der Demodulator aussetzt. Daher wird beim Stand der Technik so verfahren, daß beim nachträglichen Aufschreiben das Schreibsignal nicht sofort mit Datenschreibsignalen moduliert wird, sondern daß hiermit erst verzögert begonnen wird. Dieser spätere Zeitpunkt ist in Fig. 2 mit Z2 bezeichnet. Es ist ersichtlich, daß viel Aufzeichnungskapazität dadurch verloren geht, daß nicht sofort zum Zeitpunkt Z1 damit begonnen werden kann, das Schreibsignal mit Datenschreibsignalen zu modulieren.

Das eben erwähnte Problem ist bei der Schaltung gemäß Fig. 1 dadurch umgangen, daß diese diejenigen Funktionsgruppen aufweist, die in Fig. 1 strichpunktiert umrandet sind. Es handelt sich um einen PLL 23 und den bereits erwähnten Datensignalschalter 18. Dieser ist bei der herkömmlichen Schaltung nicht vorhanden, da die Datenschreibsignale vom Dateneingangsanschluß 16 dauernd zum VCO 13 geliefert werden. Der PLL 23 vergleicht die Phasen des VCO-Ausgangssignals und des gelesenen Signals vom Leseverstärker 12 miteinander. Das Regelabweichungssignal wird integriert und dieses integrierte Signal wird auf den zweiten Schaltkontakt des Datensignalschalters 18 gegeben. Am ersten Kontakt liegt, wie bereits erwähnt, das Datenschreibsignal vom Dateneingangsanschluß 16 an. Diese Anordnung hat zur Folge, daß dann, wenn der Datensignalschalter 18 auf das PLL-Ausgangssignal umgeschaltet ist, die Phase des VCO-Ausgangssignals dauernd mit der Phase des Lesesignals übereinstimmt.

Gibt nun die Torschaltung 17 aufgrund der ihr zugeführten Schreib- und Lesesignale zum Zeitpunkt Z1 den Befehl aus, von der Lese- auf die Schreibbetriebsart umzuschalten, werden nicht nur die beiden Masseschalter 19 und 20 umgeschaltet, sondern es wird auch der Datensignalschalter 18 umgeschaltet, so daß der VCO 13 nicht mehr das PLL-Ausgangssignal erhält, sondern das Datenschreibsignal. Das vom VCO 13 frequenzmodulierte Datenschreibsignal schließt dann genau phasenrichtig an das zuvor gelesene Signal an. Dies hat zur Folge, daß beim späteren Lesen der aufgezeichneten Information keinerlei Gefahr besteht, daß der Demodulator aussetzt. Signale können also ab dem Zeitpunkt Z1 richtig gelesen werden, weswegen es beim Umschalten auf die Schreibbetriebsart möglich ist, ab dem Zeitpunkt Z1 modulierte Datenschreibsignale an den VCO 13 zu liefern, ohne daß die Gefahr besteht, daß diese nachträglich geschriebenen Signale nachträglich nicht mehr richtig gelesen werden könnten.

Es wird darauf hingewiesen, daß das Hin- und Herschalten zwischen Schreib- und Lesebetriebsart auch mit einem anderen Schaltungsaufbau erfolgen kann, als er in Fig. 1 dargestellt ist. Die Umschalter sind bei einer praktischen Ausführung als Halbleiterbauteile ausgeführt.

Wesentlich für die Funktion der Schaltung gemäß Fig. 1 ist im Gegensatz zu bekannten Schaltungen nur, daß das Ausgangssignal vom VCO 13 durch die Wirkung der PLL 23 dauernd in Phase mit dem gelesenen, zuvor aufgezeichneten Signal gehalten wird. Dadurch schließt das nachträglich aufgezeichnete Signal phasenrichtig an das zuvor aufgezeichneten Signal an.

## Patentansprüche

1. Videorecorder mit
- einer Schreib/Leseanordnung (10) zum Schreiben von FM-Signalen auf ein Band und zum Lesen aufgezeichneter FM-Signale,
- einem VCO (13),
- einem Dateneingangsanschluß (16) zum Zuführen von Datenschreibsignalen zum VCO,
- einer ersten Umschalteinrichtung (17, 19, 20), zur Umschaltung der Schreib/Leseanordnung zwischen einer Schreib- und einer Lesebetriebsart,
- einer zweiten Umschalteinrichtung (14, 17) zum Umschalten des Schreibeingangs der Schreib/Leseanordnung zwischen aufzuzeichnenden Videoschreibsignalen (15) und aufzuzeichnenden modulierten Datenschreibsignalen, die vom VCO erzeugt werden, und
- einer PLL - Schaltung (23), die die Phasen des in der Lesebetriebsart gelesenen Signals und des VCO-Ausgangssignals miteinander vergleicht und ein integriertes Regelabweichungssignal als PLL-Ausgangssignal ausgibt,
wobei die erste Umschalteinrichtung (17 - 20) so ausgebildet ist, daß sie ferner einen Datensignalschalter (18) aufweist, der in der Lesebetriebsart das PLL-Ausgangssignal auf den Eingang des VCO schaltet,
und in der Schreibbetriebsart den Dateneingangsanschluß (16) auf den Eingang des VCO (13) schaltet.

## Claims

1. Video recorder having
- a write/read system (10) for writing FM signals onto a tape and for reading recorded FM signals,
- a VCO (13),
- a data input connection (16) for supplying data write signals to the VCO,
- a first switchover device (17, 19, 20) for switching the write/read system over between a writing and a reading mode,
- a second switchover device (14, 17) for switching the write input of the write/read system over between video write signals (15) to be recorded and modulated data write signals to be recorded, which are generated by the VCO, and
- a PLL circuit (23) which compares the phases of the signals read in the read mode and of the VCO output signals with one another and emits an integrated control deviation signal as PLL output signal,
wherein the first switchover device (17 - 20) is designed so that it furthermore has a data signal switch (18) which switches the PLL output signal to the input of the VCO in the read mode,
and which switches the data input connection (16) to the input of the VCO (13) in the write mode.

## Revendications

1. Enregistreur vidéo comprenant
- un dispositif d'enregistrement / de lecture (10) pour enregistrer des signaux FM sur une bande et pour lire des signaux FM enregistrés,
- un VCO (13),
- une borne d'entrée de données (16) pour transmettre des signaux d'enregistrement de données au VCO,
- un premier dispositif de commutation (17, 19, 20) pour commuter le dispositif d'enregistrement / de lecture entre un mode d'enregistrement et un mode de lecture,
- un deuxième dispositif de commutation (14, 17) pour commuter l'entrée d'enregistrement du dispositif d'enregistrement / de lecture entre des signaux d'enregistrement vidéo (15) à enregistrer et des signaux d'enregistrement de données modulés à enregistrer qui sont produit par le VCO, et
- un circuit PLL (23) qui compare entre elles les phases du signal lu en mode de lecture et du signal de sortie du VCO et délivre un signal d'écart de réglage intégré en tant que signal de sortie PLL,
le premier dispositif de commutation (17-20) étant réalisé de sorte qu'il comprend en outre un commutateur de signal de données (18) qui, en mode de lecture, commute le signal de sortie PLL sur l'entrée du VCO,
et qui, en mode d'enregistrement, commute la borne d'entrée de données (16) sur l'entrée du VCO (13).
